# EUROPÄISCHE PATENTSCHRIFT

(11) **EP 1 613 987 B1**
(45) Veröffentlichungstag und Bekanntmachung des Hinweises auf die Patenterteilung: **09.02.2011**
(21) Anmeldenummer: 04726956.8
(22) Anmeldetag: 13.04.2004
(51) Int. Cl.: G02B 5/18, B29B 11/00, G02B 1/12

(54) **VERFAHREN UND WERKZEUG ZUR HERSTELLUNG TRANSPARENTER OPTISCHER ELEMENTE AUS POLYMEREN WERKSTOFFEN**
METHOD AND MOULD FOR PRODUCING TRANSPARENT OPTICAL ELEMENTS CONSISTING OF POLYMER MATERIALS
PROCEDE ET OUTIL POUR PRODUIRE DES ELEMENTS OPTIQUES TRANSPARENTS EN MATERIAUX POLYMERES

(30) Priorität: 15.04.2003 DE 10318566
(43) Veröffentlichungstag der Anmeldung: 11.01.2006
(73) Patentinhaber: Fraunhofer-Gesellschaft zur Förderung der angewandten Forschung e.V., 80686 München (DE); Fresnel Optics GmbH, 99510 Apolda (DE)
(72) Erfinder: SCHULZ, Ulrike, 07751 Kunitz (DE); MUNZERT, Peter, 07743 Jena (DE); KAISER, Norbert, 07745 Jena (DE); HOFMANN, Werner, 07747 Jena (DE); BITZER, Martin, 99510 Apolda (DE); GEBHARDT, Marion, 99510 Apolda (DE)
(74) Vertreter: Pfenning, Meinig & Partner GbR
(86) Internationale Anmeldenummer: PCT/DE2004/000817
(87) Internationale Veröffentlichungsnummer: WO 2004/092789

(56) Entgegenhaltungen:
- WO-A-01/29148
- US-A- 5 772 905
- WALHEIM S ET AL: "NANOPHASE-SEPARATED POLYMER FILMS AS HIGH-PERFORMANCE ANTIREFLECTION COATINGS" SCIENCE, AMERICAN ASSOCIATION FOR THE ADVANCEMENT OF SCIENCE,, US, Bd. 283, Nr. 5401, 22. Januar 1999 (1999-01-22), Seiten 520-522, XP000891228 ISSN: 0036-8075
- GHAEMI H F ET AL: "Surface plasmons enhance optical transmission through subwavelength holes" PHYSICAL REVIEW, B. CONDENSED MATTER, AMERICAN INSTITUTE OF PHYSICS. NEW YORK, US, Bd. 58, Nr. 11, 15. September 1998 (1998-09-15), Seiten 6779-6782, XP002133008 ISSN: 0163-1829

## Beschreibung

Die Erfindung betrifft ein Verfahren sowie Werkzeuge zur Herstellung transparenter optischer Elemente aus polymeren Werkstoffen. Die so hergestellten optischen Elemente sollen auf mindestens einer Oberfläche zumindest bereichsweise eine reduzierte Grenzflächenreflexion erreichen.

Solche optischen Elemente aus polymeren Werkstoffen werden immer häufiger für die verschiedensten Anwendungen eingesetzt. Dabei sind reflexionsbedingte Verluste unerwünscht und der Anteil an an den Oberflächen solcher optischen Elemente reflektierter elektromagnetischer Strahlung, die nachfolgend nicht genutzt werden kann, soll so klein als möglich gehalten werden. So werden Bestrebungen unternommen, diesen Anteil ≤ 4%, bevorzugt ≤ 1% pro Fläche zu halten.

Um diesem Problem entgegen zu wirken wurden unterschiedliche Lösungsansätze in der Vergangenheit verfolgt.

So ist es bekannt, auf den Oberflächen von optischen Elementen Schichtsysteme, die aus mehreren übereinander angeordneten dünnen Schichten gebildet worden sind, in der Regel als Wechselschichtsysteme auszubilden. Die Aufbringung solcher Schichtsysteme ist kostenintensiv, führt auch zu einer Reduzierung der Transmission und Haftungsprobleme solcher Schichtsysteme auf den Oberflächen von optischen Elementen können nicht ausgeschlossen werden.

Da solche Schichtsysteme üblicherweise im Vakuum durch an sich bekannte PVD- oder CVD-Verfahrenstechniken ausgebildet werden können ist die Herstellung solcher optischen Elemente in großen Losgrößen mit entsprechend hohen Kosten verbunden.

Ein anderer Weg der zur Reduzierung des reflektierten Anteils an elektromagnetischer Strahlung gewählt worden ist, besteht in der Ausbildung von Mikrostrukturen, den so genannten Mottenaugenstrukturen auf den entsprechenden zu entspiegelnden Oberflächen. Entsprechende Lösungen sind beispielsweise von A. Gombert und W. Glaubitt in Thin solid films 351 (1999), Seiten 73 bis 78 und von D. L. Brundrett, E. N. Glysis, T. K. Gaylord in Applied optics 16 (1994), Seiten 2695 bis 2706 beschrieben.

Mit diesen bekannten Lösungen kann eine Reduzierung des Anteils an reflektierter elektromagnetischer Strahlung jeweils in entsprechend begrenzten Einfallswinkelbereichen und in einem entsprechend begrenzten Spektralbereich, also für bestimmte Einfallswinkel bzw. für ausgewählte Wellenlängen der jeweiligen elektromagnetischen Strahlung erreicht werden.

Für die Ausbildung der an sich bekannten Mikrostrukturen ist insbesondere für die Herstellung von Formwerkzeugen ein erheblicher Aufwand erforderlich, da in solchen Werkzeugen filigrane Negativkonturen ausgebildet werden müssen. Dies kann zum einen durch eine thermische Bearbeitung mit Hilfe von fokussierten Energiestrahlen oder eine photolithographische Ausbildung erfolgen.

In jedem Fall ist ein hoher Aufwand erforderlich. Außerdem sind die so herstellbaren Mikrostrukturen auf entsprechende Mindestdimensionen, die verfahrensbedingt nicht unterschritten werden können, eingeschränkt.

Außerdem ist es aus WO 01/29148 A1 bekannt Oberflächen von Schichten mit einer antireflektierenden Schicht zu versehen, die mit einer Oberflächenstruktur im Nanometerbereich gebildet werden soll.

Die in US 5,772,905 beschriebene technische Lösung betrifft das Einprägen von Löchern oder Gräben in eine Oberfläche mit einem Presswerkzeug.

Es ist daher Aufgabe der Erfindung eine Lösung vorzuschlagen, mit der die Oberfläche von transparenten optischen Elementen aus polymeren Werkstoffen so manipuliert werden kann, dass eine reduzierte Grenzflächenreflexion erreicht wird, wobei gleichzeitig die Herstellungskosten reduziert und die Erfindung beider Herstellung der unterschiedlichsten optischen Elementen eingesetzt werden kann.

Erfindungsgemäß wird diese Aufgabe mit einem Verfahren, das die Merkmale des Anspruchs 1 aufweist, gelöst, wobei ein Werkzeug zur Herstellung von optischen Elementen nach Anspruch 15 eingesetzt werden kann.

Vorteilhafte Ausgestaltungsformen und Weiterbildungen der Erfindung können mit den in den untergeordneten Ansprüchen bezeichneten Merkmalen erreicht werden.

Bei dem erfindungsgemäßen Verfahren zur Herstellung transparenter optischer Elemente aus, deren Oberfläche zumindest bereichsweise eine reduzierte Grenzflächenreflexion aufweist, wird so vorgegangen, dass in einem ersten Schritt ein Bezugselement, das auch als "Master" bezeichnet werden kann und aus einem polymerem Werkstoff besteht, innerhalb einer Vakuumkammer dem Einfluss energiereicher Ionen an der jeweiligen Oberfläche ausgesetzt wird. Die energiereichen Ionen werden z.B. mit Hilfe eines Plasmas generiert und die jeweilige Oberfläche des Bezugselementes unterliegt einem Ionenbeschuss.

Als Bezugselement kann bevorzugt ein konventionell hergestelltes optisches Element eingesetzt werden, das dann, wie vorab erklärt, behandelt wird.

Durch den Einfluss der energiereichen Ionen wird auf der jeweiligen Oberfläche des Bezugselementes eine unregelmäßige Nanostruktur ausgebildet. Diese Nanostruktur zeichnet sich dadurch aus, dass eine Vielzahl von Erhebungen mit dazwischen liegenden Vertiefungen jeweils alternierend zueinander ausgebildet worden sind. Die Erhebungen und demzufolge auch die entsprechenden Vertiefungen sind über die Fläche in unterschiedlichen Dimensionen ausgebildet, so dass mit Hilfe der entsprechenden Nanostruktur eine Brechzahlgradientenschicht erreichbar ist.

In einem zweiten Schritt wird die jeweilige Oberfläche des Bezugselementes mit einer elektrisch leitenden Dünnschicht überzogen.

Die Dicke dieser Dünnschicht muss lediglich elektrisch leitende Eigenschaften erreichen, so dass in einem nachfolgend durchzuführenden dritten Verfahrensschritt eine galvanische Abformung eines Werkzeuges erfolgen kann.

Ein solches Werkzeug weist dann eine vollständige Negativkontur der entsprechend manipulierten Oberfläche des Bezugselementes auf, in der auch die bereits beschriebene Nanostruktur mit den Erhebungen entsprechenden Vertiefungen und Vertiefungen entsprechenden Erhebungen überlagert/integriert ist.

Die galvanische Abformung für die Herstellung von Werkzeugen kann auf herkömmlichem Wege durchgeführt werden und solche Werkzeuge beispielsweise durch Abscheidung von Nickel erhalten werden.

Mit Hilfe der so hergestellten Werkzeuge können dann die jeweiligen optischen Elemente mit an sich bekannten Formgebungsverfahren in großer Stückzahl hergestellt werden. Vorteilhaft ist es möglich, von lediglich einem Bezugselement mit ausgebildeter Nanostruktur eine Vielzahl von Werkzeugen durch galvanische Abformung herzustellen, wodurch eine weitere Herstellungskostenreduzierung erreichbar ist.

Neben einfach gestalteten Bezugselementen mit ebenen planaren oder auch kontinuierlich gewölbten Oberflächen können erfindungsgemäß auch Bezugselemente für die Herstellung von optischen Elementen mit diskontinuierlichen Oberflächenkonturen eingesetzt werden. Solche Bezugselemente können optisch wirksame Oberflächenkonturen, beispielsweise Fresnelkonturen aufweisen und es besteht mit der erfindungsgemäßen Lösung die Möglichkeit, zumindest die Grenzflächenreflexion an Wirkflanken zu reduzieren.

Mit Hilfe eines Werkzeuges, wie es nach dem dritten Verfahrensschritt vorliegt, können die optischen Elemente dann entsprechend hergestellt werden. So besteht die Möglichkeit entsprechende optische Elemente durch Heißprägen von plattenförmigen Elementen oder Folien aus Kunststoff bzw. aus einem Kunststoffgranulat herzustellen.

Es ist aber ebenfalls möglich optische Elemente durch Kunststoffspritzguss in solchen Werkzeugen herzustellen.

Die optischen Elemente können aber auch durch ein Extrusionsprägeverfahren hergestellt werden.

Für den Fall, dass optische Elemente aus mindestens zwei Werkstoffen mit jeweils unterschiedlichem Brechungsindex und/oder mittels einer kratzfesteren Oberflächenbeschichtung ausgebildet werden sollen, bietet sich vorteilhaft das Verfahren der UV-Replikation an.

Die optischen Elemente können aus den unterschiedlichsten Kunststoffen hergestellt werden. Neben den gewünschten optischen Eigenschaften und hier insbesondere dem Brechungsindex, sind lediglich die Eigenschaften, die beim jeweiligen Formgebungsverfahren wesentlich sind, zu berücksichtigen.

Darüber hinaus besteht die Möglichkeit die optisch wirksame Nanostruktur auf einer Oberflächenbeschichtung eines optischen Elementes auszubilden. Eine solche besonders vorteilhafte "kratzfeste" Beschichtung kann beispielsweise im Sol-Gel-Verfahren, als organisches-anorganisches Hybrid-Polymer, wie es z.B. unter Handelsbezeichnung "Ormocere" verfügbar ist, aufgebracht und nach bzw. bei Ausbildung der die Reflexion vermindernden Nanostruktur ausgehärtet wird. Die anorganische Komponente im Hybrid-Polymer ist hierbei bevorzugt eine Glaskomponente (z.B. Siliziumdioxid oder ein Silan).

In dieser Form können die die Grenzflächenreflexion reduzierenden Nanostruktur neben optischen Elementen aus Kunststoff auch auf Oberflächen von optischen Elementen, die aus Werkstoffen gebildet sind, die mit Formgebungsverfahren nicht oder nur schwer bearbeitet werden können, ausgebildet werden. So kann die Erfindung beispielsweise auch für die Herstellung optischer Elemente, die aus einem Glas bestehen, eingesetzt werden.

Die die erfindungswesentliche Nanostruktur bildenden Erhebungen mit den dazwischen liegenden Vertiefungen können auf der Oberfläche des jeweiligen Bezugselementes so ausgebildet werden, dass die Höhen der verschiedenen auf der Oberfläche ausgebildeten Erhebungen in einem Bereich zwischen 30 nm und 210 nm liegen. Dabei können die einzelnen Erhebungen jeweils mittlere Dicken zwischen 30 nm und 150 nm aufweisen, wobei unter mittlerer Dicke die jeweilige Dicke einer Erhebung in der jeweils mittleren Höhe der Erhebung verstanden werden soll.

Bevorzugt ist es, die Erhebungen mit ihren jeweiligen Höhen und/oder Dicken so herzustellen, dass innerhalb des jeweiligen Intervalls eine gleichmäßige Verteilung, um einen Mittelwerk, z.B. 120 nm für die Höhe und 80 nm für die Dicke erreicht worden ist.

Diesen Angaben entspricht die Dimensionierung des Negativabdrucks der Nanostruktur auf dem Werkzeug zur Herstellung der optischen Elemente.

Überraschenderweise hat sich herausgestellt, dass eine solche auf einer Oberfläche von Bezugselementen ausgebildete Nanostruktur durch den zweiten und dritten Verfahrensschritt, gemäß Patentanspruch 1, auf die Oberfläche eines Werkzeuges übertragen werden kann, wobei, wenn überhaupt, nur geringfügige Abweichungen von der Positivkontur auf der Oberfläche des eingesetzten Bezugselementes zu verzeichnen sind.

Nachfolgend soll der Verfahrensschritt 1, nämlich die Ausbildung der die Oberflächenreflexion im Wesentlichen reduzierenden Nanostruktur auf Bezugselementen detaillierter beschrieben werden.

So wird ein solches Bezugselement aus einem polymeren Kunststoffwerkstoff, bevorzugt Polymethylmethacrylat (PMMA), Diethylenglycolbisalylcarbonat (CR39) oder metylmethacrylat- haltigen Polymeren in eine Vakuumkammer eingesetzt und dort dem Einfluss eines Plasmas ausgesetzt. Mit diesem Plasma werden energiereiche Ionen generiert und die gewünschte Oberfläche des Bezugselementes mit den Ionen beschossen. Bevorzugt wird ein DC-Argonplasma, dem besonders bevorzugt Sauerstoff zugegeben wird, eingesetzt.

Dabei sollte innerhalb der Vakuumkammer bei einem Druck, unterhalb 10⁻³ mbar, bevorzugt bei ca. 3x10⁻⁴ mbar gearbeitet werden.

Das Plasma sollte mit mindestens 30 sccm Sauerstoff betrieben werden.

Die generierten Ionen sollten Energien im Bereich zwischen 100 eV und 160 eV aufweisen, wobei die jeweilige Ionenenergie unter Berücksichtigung des Bezugselementewerkstoffes eingestellt werden sollte. Der jeweilige Bezugselementewerkstoff sollte auch bei der jeweiligen Dauer des Ionenbeschusses der Oberfläche berücksichtigt werden.

So können Bezugselemente aus Polymethylmethacrylat (PMMA) mit Ionen, deren Energie im Bereich zwischen 100 eV und 160 eV, bevorzugt zwischen 120 eV und 140 eV gehalten ist, über einen Zeitraum zwischen 200 s und 400 s, bevorzugt zwischen 250 s und 350 s mit Ionen beschossen werden.

Bei Bezugselementen aus Diethylenglycolbisalylcarbonat sollten die Ionen Mindestenergien von 120 eV, bevorzugt 150 eV aufweisen und der Ionenbeschuss über einen Zeitraum von mindestens 500 s erfolgen.

Bei mit dem erfindungsgemäßen Verfahren hergestellten optischen Elementen konnte der Anteil der an der Oberfläche reflektierten elektromagnetischen Strahlung im Wellenlängenbereich zwischen 400 nm und 1100 nm auf maximal 2% reduziert werden. In einem Wellenlängenbereich zwischen 420 nm und 870 nm, also einem wesentlichen Teil des sichtbaren Lichtes, konnte eine Reduzierung des reflektierten Anteils an elektromagnetischer Strahlung auf weniger als 1,5% erreicht werden.

Mit der Erfindung können die unterschiedlichsten optischen Elemente, die für elektromagnetische Strahlung und hier insbesondere im Spektralbereich des sichtbaren Lichtes, des infraroten Lichtes und teilweise auch im Spektralbereich des UV-Lichtes für verschiedenste Anwendungen hergestellt werden. So können ohne weiteres auch die unterschiedlichsten projizierenden optischen Elemente und hierbei insbesondere Fresnellinsen mit verbesserten optischen Eigenschaften bei lediglich geringfügig erhöhten Kosten hergestellt werden.

Es ist aber auch die Herstellung anderer optischer Elemente, wie beispielsweise optischer Fenster und Prismen möglich.

Die Erfindung kann außerdem für die Herstellung von optischen Linsen (auch Linsenarrays), Strahlteilern, Lichtwellenleitern, Diffusoren, Lentikularen sowie für optisch transparente Folien vorteilhaft eingesetzt werden.

Ein weiterer wichtiger Anwendungsfall sind transparente Überdeckungen von optischen Displays oder optischen Anzeigeelementen. So können beispielsweise die Anzeigedisplays von unterschiedlichsten elektrischen oder elektronischen Geräten, wie beispielsweise Telefone erfindungsgemäß hergestellt werden.

Dabei können insbesondere Doppelreflexionen verhindert werden.

Für bestimmte optische Anzeigeelemente kann die Erfindung ebenfalls als Überdeckung eingesetzt werden, wobei dann Lichtquellen mit reduzierter Leistung eingesetzt werden können.

Nachfolgend soll die Erfindung beispielhaft näher erläutert werden.

Dabei zeigt:

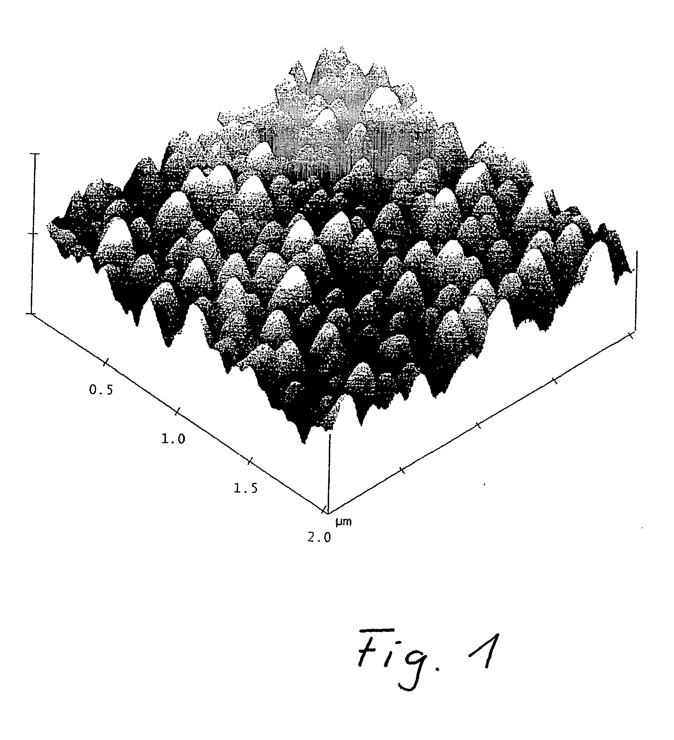

- Figur 1: eine AFM-Aufnahme (Rasterkraftmikroskop) einer Nanostruktur, die auf einem Bezugs- element aus Polymethylmethacrylat ausgebil- det worden ist.

Dabei wurde ein Bezugselement aus Polymethylmethacrylat in eine Vakuumkammer eingesetzt und in der Kammer der Druck auf 7 bis 8 x 10⁻⁶ mbar reduziert. Mit Hilfe einer Plasmainonenquelle APS 904 (Leybold Optics) wurde ein Argon-Plasma unter Zugabe von 30 sccm Sauerstoff erzeugt, wobei ein Druck von ca. 3 x 10⁻⁴ mbar eingehalten worden ist.

Die Plasmaionenquelle wurde mit einer BIAS Spannung von mindestens 120 V betrieben.

So konnten Ionen, deren Energie mindestens 120 eV betrug, generiert und diese auf die PMMA-Oberfläche des Bezugselementes geschossen werden.

Der Ionenbeschuss wurde über 300 s durchgeführt.

Wie mit Figur 1 verdeutlicht, konnte eine unregelmäßige Nanostruktur durch den Ionenbeschuss ausgebildet werden, wobei die einzelnen Erhebungen jeweils unterschiedliche Höhen im Bereich zwischen 50 bis 120 nm sowie mittlere Dicken im Bereich zwischen 50 und 120 nm aufwiesen, ausgebildet werden. In Figur 1 ist außerdem erkennbar, dass die Erhebungen ein Aspektverhältnis von ca. 1 : 1 einhalten.

Auf die nunmehr nanostrukturierte Oberfläche des Bezugselementes wurde eine dünne Goldschicht mit einer maximalen Schichtdicke von 5 nm, bevorzugt unterhalb 1 nm mit einem an sich bekannten Dünnschichtverfahren ausgebildet.

Das so vorbereitete Bezugselement wurde dann für eine galvanische Abformung genutzt. Dabei konnte ein Werkzeug aus Nickel hergestellt werden, dass eine nahezu identische Negativkontur, also auch mit überlagerter Nanostruktur aufwies, hergestellt werden. Dieses Werkzeug wurde dann für die Herstellung optischer Elemente in Heißprägetechnik eingesetzt, wobei ein verschleißbedingter Austausch erst nach mindestens 5000 Abformungen erforderlich war.

## Patentansprüche

1. Verfahren zur Herstellung transparenter optischer Elemente, deren Oberfläche zumindest bereichsweise eine reduzierte Grenzflächenreflexion aufweist,
bei dem
die jeweilige Oberfläche eines dem jeweiligen optischen Element entsprechenden Bezugselementes, das aus einem polymeren Werkstoff besteht, in einem Vakuum dem Einfluss energiereicher Ionen ausgesetzt und
so auf der jeweiligen Oberfläche eine unregelmäßige Nanostruktur mit alternierend angeordneten Erhebungen und dazwischen liegenden Vertiefungen ausgebildet wird;
nachfolgend die jeweilige Oberfläche mit einer elektrisch leitenden Dünnschicht überzogen,
sich daran anschließend durch galvanische Abformung ein Werkzeug mit einer Negativkontur, die von der Nanostruktur überlagert ist, erhalten und
mit einem solchen Werkzeug auf mindestens einer Oberfläche eines transparenten optischen Elementes mit einem Formgebungsverfahren eine die Grenzflächenreflexion reduzierenden Nanostruktur ausgebildet wird.

2. Verfahren nach Anspruch 1,
**dadurch gekennzeichnet, dass** ein Bezugselement mit einer optisch wirksamen Oberflächenkontur eingesetzt wird.

3. Verfahren nach Anspruch 1 oder 2,
**dadurch gekennzeichnet, dass** die energiereichen Ionen mittels eines Argon/Sauerstoff-Plasmas generiert werden.

4. Verfahren nach einem der vorhergehenden Ansprüche, **dadurch gekennzeichnet, dass** für die Herstellung des Bezugselementes, Polymethylmethacrylat, Diethylenglycolbisalylcarbonat (CR39) oder methylmethacrylat- haltige Polymere eingesetzt werden.

5. Verfahren nach einem der vorhergehenden Ansprüche, **dadurch gekennzeichnet, dass** mittels der energiereichen Ionen die Erhebungen der Nanostruktur mit Höhen im Bereich zwischen 30 nm und 210 nm ausgebildet werden.

6. Verfahren nach einem der vorhergehenden Ansprüche, **dadurch gekennzeichnet, dass** die mittleren Dicken der Erhöhungen der Nanostruktur im Bereich zwischen 30 nm und 150 nm ausgebildet werden.

7. Verfahren nach einem der vorhergehenden Ansprüche, **dadurch gekennzeichnet, dass** die elektrisch leitende Schicht als dünne Metallschicht ausgebildet wird.

8. Verfahren nach Anspruch 9,
**dadurch gekennzeichnet, dass** die elektrisch leitende Schicht aus Gold ausgebildet wird.

9. Verfahren nach einem der vorhergehenden Ansprüche, **dadurch gekennzeichnet, dass** die auf die jeweilige Oberfläche auftreffenden Ionen eine Energie im Bereich zwischen 100 eV und 160 eV aufweisen.

10. Verfahren nach einem der vorhergehenden Ansprüche, **dadurch gekennzeichnet, dass** ein Ionenbeschuss der jeweiligen Oberfläche über einen Zeitraum zwischen 200 s und 600 s durchgeführt wird.

11. Verfahren nach einem der vorhergehenden Ansprüche, **dadurch gekennzeichnet, dass** ein Ionenbeschuss bei einem Druck unterhalb 10⁻³ mbar durchgeführt wird.

12. Verfahren nach einem der vorhergehenden Ansprüche, **dadurch gekennzeichnet, dass** die Formgebung der optischen Elemente durch Heißprägen oder durch Kunststoffspritzgusstechnik erfolgt.

13. Verfahren nach einem der vorhergehenden Ansprüche, **dadurch gekennzeichnet, dass** die Formgebung der optischen Elemente durch Extrusionsprägen oder UV-Replikation erfolgt.

14. Verfahren nach einem der vorhergehenden Ansprüche, **dadurch gekennzeichnet, dass** die Oberfläche eines optischen Elementes mit einem organischanorganischem Hybrid-Polymer beschichtet und die Nanostruktur mit einem Werkzeug auf der Oberfläche dieser Hybrid-Polymer-Schicht ausgebildet wird.

15. Werkzeug zur Herstellung optischer Elemente mit einem Verfahren nach einem der Ansprüche 1 bis 14, wobei
auf einer Oberfläche des Werkzeugs eine unregelmäßige, Nanostruktur mit alternierend angeordneten Erhebungen und dazwischen liegenden Vertiefungen ausgebildet ist,
**dadurch gekennzeichnet, dass**
die Vertiefungen, zur Ausbildung einer Brechzahlgradientenschicht an optischen Elementen, jeweils unterschiedliche Tiefen innerhalb eines Intervalls zwischen 30 nm und 210 nm aufweisen, deren Tiefe innerhalb des Intervalls gleichmäßig um einen Mittelwert verteilt ist.

16. Werkzeug nach Anspruch 15, **dadurch gekennzeichnet, dass** die Vertiefungen eine mittlere lichte Weite im Bereich zwischen 30 nm und 150 nm aufweisen.

17. Werkzeug nach Anspruch 15 oder 16, **dadurch gekennzeichnet, dass** die jeweiligen Dicken von Vertiefungen oder Erhebungen innerhalb eines Intervalls gleichmäßig um einen Mittelwert verteilt sind.

18. Werkzeug nach einem der Ansprüche 15 bis 17,
**dadurch gekennzeichnet, dass** es zur Herstellung von Fresnellinsen ausgebildet ist.

19. Werkzeug nach einem der Ansprüche 15 bis 17,
**dadurch gekennzeichnet, dass** es zur Herstellung optischer Fenster, optischer Linsen, Lentikularen, Strahlteilern, Lichtwellenleitern oder optischen Prismen ausgebildet ist.

20. Werkzeug nach einem der Ansprüche 15 bis 17, **dadurch gekennzeichnet, dass** es zur Herstellung optisch transparenter Folien ausgebildet ist.

21. Werkzeug nach einem der Ansprüche 15 bis 17, **dadurch gekennzeichnet, dass** es zur Herstellung von Überdeckungen für Displays oder für optische Anzeigeelemente ausgebildet ist.

## Claims

1. Method for producing transparent optical elements, the surface of which has reduced interfacial reflection at least in regions,
in which
the respective surface of a reference element which consists of a polymeric material and corresponds to the respective optical element is exposed to the influence of high-energy ions in a vacuum and
in this way an irregular nanostructure having alternately arranged elevations and intermediate depressions is formed on the respective surface;
subsequently, the respective surface is coated with an electrically conducting thin film, following that a mould having a negative contour which is superposed by the nanostructure is obtained by electroforming and
using a mould of this type, a nanostructure reducing the interfacial reflection is formed on at least one surface of a transparent optical element by a shaping process.

2. Method according to claim 1,
**characterised in that**
a reference element having an optically effective surface contour is used.

3. Method according to either claim 1 or claim 2,
**characterised in that**
the high-energy ions are generated by means of an argon/oxygen plasma.

4. Method according to any one of the preceding claims, **characterised in that** polymethylmethacrylate, diethylene glycol bis allylcarbonate (CR39) or methylmethacrylate-containing polymers are used for the production of the reference element.

5. Method according to any one of the preceding claims, **characterised in that**, by means of the high-energy ions, the elevations of the nanostructure are formed with heights in the range between 30 nm and 210 nm.

6. Method according to any one of the preceding claims, **characterised in that** the average thicknesses of the elevations of the nanostructure are formed in the range between 30 nm and 150 nm.

7. Method according to any one of the preceding claims, **characterised in that** the electrically conducting layer is formed as a thin metal film.

8. Method according to claim 9, **characterised in that** the electrically conducting layer is formed from gold.

9. Method according to any one of the preceding claims, **characterised in that** the ions impinging on the respective surface have an energy in the range between 100 eV and 160 eV.

10. Method according to any one of the preceding claims, **characterised in that** an ion bombardment of the respective surface is carried out over a time period of between 200 s and 600 s.

11. Method according to any one of the preceding claims, **characterised in that** an ion bombardment is carried out at a pressure below 10⁻³ mbar.

12. Method according to any one of the preceding claims, **characterised in that** the optical elements are shaped by hot embossing or by plastics material injection-moulding technology.

13. Method according to any one of the preceding claims, **characterised in that** the optical elements are shaped by extrusion embossing or UV replication.

14. Method according to any one of the preceding claims, **characterised in that** the surface of an optical element is coated with an organic-inorganic hybrid polymer and the nanostructure is formed using a mould on the surface of said hybrid-polymer layer.

15. Mould for producing optical elements using a method according to any one of claims 1 to 14, wherein
an irregular nanostructure having alternately arranged elevations and intermediate depressions is formed on a surface of the mould,
**characterised in that**,
for forming a refractive index gradient layer on optical elements, the depressions each have different depths within an interval between 30 nm and 210 nm, the depth being distributed uniformly either side of an average value within an interval.

16. Mould according to claim 15, **characterised in that** the depressions have an average clear width in the range between 30 nm and 150 nm.

17. Mould according to either claim 15 or claim 16, **characterised in that** the respective thicknesses of depressions or elevations are distributed uniformly either side of a mean value within an interval.

18. Mould according to any one of claims 15 to 17, **characterised in that** it is formed for the production of Fresnel lenses.

19. Mould according to any one of claims 15 to 17, **characterised in that** it is formed for the production of optical windows, optical lenses, lenticular lenses, beam splitters, optical waveguides or optical prisms.

20. Mould according any one of claims 15 to 17, **characterised in that** it is formed for the production of optically transparent films.

21. Mould according to any one of claims 15 to 17, **characterised in that** it is formed for the production of coverings for displays or for optical display elements.

## Revendications

1. Procédé de fabrication d'éléments optiques transparents, dont la surface présente au moins par zones une réflexion d'interface réduite, dans lequel :
la surface respective d'un élément de référence correspondant à l'élément optique respectif, lequel élément de référence est constitué d'un matériau polymère, est exposée dans un vide à l'influence d'ions fortement énergétiques, et
il se forme par suite sur la surface respective une nanostructure irrégulière avec des protubérances aménagées en alternance et des creux situés entre elles ;
ensuite, la surface respective est revêtue d'une couche mince conductrice de l'électricité,
puis on obtient par moulage galvanique un outil à contour négatif qui est superposé à la nanostructure et
avec un tel outil sur au moins une surface d'un élément optique transparent, on forme par un procédé de façonnage une nanostructure réduisant la réflexion d'interface.

2. Procédé selon la revendication 1
**caractérisé en ce qu'**on utilise un élément de référence avec un contour de surface optiquement efficace.

3. Procédé selon la revendication 1 ou 2,
**caractérisé en ce qu'**on génère les ions fortement énergétiques au moyen d'un plasma d'argon/oxygène.

4. Procédé selon l'une quelconque des revendications précédentes, **caractérisé en ce que** l'on utilise pour la fabrication de l'élément de référence du poly(méthacrylate de méthyle), du bisallylcarbonate de diéthylèneglycol (CR39) ou des polymères contenant du méthacrylate de méthyle.

5. Procédé selon l'une quelconque des revendications précédentes, **caractérisé en ce qu'**au moyen des ions fortement énergétiques, on forme les
protubérances de la nanostructure avec des hauteurs dans la plage entre 30 nm et 210 nm.

6. Procédé selon l'une quelconque des revendications précédentes, **caractérisé en ce que** les épaisseurs moyennes des protubérances de la nanostructure se situent dans la plage entre 30 nm et 150 nm.

7. Procédé selon l'une quelconque des revendications précédentes, **caractérisé en ce que** la couche conductrice de l'électricité est conformée en couche métallique mince.

8. Procédé selon la revendication 7, **caractérisé en ce que** la couche conductrice de l'électricité est formée d'or.

9. Procédé selon l'une quelconque des revendications précédentes, **caractérisé en ce que** les ions frappant la surface respective présentent une énergie dans la plage entre 100 eV et 160 eV.

10. Procédé selon l'une quelconque des revendications précédentes, **caractérisé en ce qu'**un bombardement ionique de la surface respective est réalisé sur un intervalle de temps compris entre 200 s et 600 s.

11. Procédé selon l'une quelconque des revendications précédentes, **caractérisé en ce qu'**un bombardement ionique se fait à une pression en dessous de 10⁻³ mbar.

12. Procédé selon l'une quelconque des revendications précédentes, **caractérisé en ce que** le façonnage des éléments optiques se fait par estampage à chaud ou par une technique de moulage par injection de matière plastique.

13. Procédé selon l'une quelconque des revendications précédentes, **caractérisé en ce que** le façonnage des éléments optiques se fait par estampage par extrusion ou réplication UV.

14. Procédé selon l'une quelconque des revendications précédentes, **caractérisé en ce que** la surface d'un élément optique est revêtue d'un polymère hybride organique-inorganique et la nanostructure est formée avec un outil sur la surface de cette couche de polymère hybride.

15. Outil de fabrication d'éléments optiques avec un procédé selon l'une quelconque des revendications 1 à 14, dans lequel on forme sur une surface de l'outil une nanostructure irrégulière avec des protubérances agencées en alternance et des creux disposés entre elles,
**caractérisé en ce que** les creux, pour former une couche à gradient d'indice de réfraction sur des éléments optiques, présentent des profondeurs respectivement différentes à l'intérieur d'un intervalle compris entre 30 nm et 210 nm, la profondeur à l'intérieur de l'intervalle étant distribuée uniformément autour d'une valeur moyenne.

16. Outil selon la revendication 15, **caractérisé en ce que** les creux ont une ouverture moyenne dans la plage entre 30 nm et 150 nm.

17. Outil selon la revendication 15 ou 16, **caractérisé en ce que** les épaisseurs respectives des creux ou des protubérances à l'intérieur d'un intervalle sont distribuées uniformément autour d'une valeur moyenne.

18. Outil selon l'une quelconque des revendications 15 à 17, **caractérisé en ce qu'**il est formé pour la fabrication de lentilles de Fresnel.

19. Outil selon l'une quelconque des revendications 15 à 17, **caractérisé en ce qu'**il est formé pour la fabrication de fenêtres optiques, de lentilles optiques, de lenticulaires, de diviseurs de faisceaux, de guides d'onde ou de prismes optiques.

20. Outil selon l'une quelconque des revendications 15 à 17, **caractérisé en ce qu'**il est formé pour la fabrication de films optiques transparents.

21. Outil selon l'une quelconque des revendications 15 à 17, **caractérisé en ce qu'**il est formé pour la fabrication de recouvrements pour affichages ou pour éléments d'affichage optiques.
